# EUROPÄISCHE PATENTANMELDUNG

(11) **EP 2 105 891 A1**
(43) Veröffentlichungstag der Anmeldung: **30.09.2009**
(21) Anmeldenummer: 09002229.4
(22) Anmeldetag: 18.02.2009
(51) Int. Cl.: G07F 7/06

(54) **Leergut-Rücknahmeautomat**

(30) Priorität: 27.03.2008 DE 102008015815
(71) Anmelder: Wincor Nixdorf International GmbH, 33106 Paderborn (DE)
(72) Erfinder: Fischer, Axel, 98693 Ilmenau (DE); Jokhovets, Lioubov, 98693 Ilmenau (DE); Keller, Wolfgang, 12163 Berlin (DE); Sommer, Matthias, 98693 Ilmenau (DE); Springsguth, Stephan, 98704 Langenwiesen (DE)

(57) **Zusammenfassung**

Es wird eine Vorrichtung zur Erfassung von Erkennungsmerkmalen von liegenden Leergutbehältern in Leergut-Rücknahmeautomaten vorgeschlagen mit einer Transportstrecke (1, 13, 19) für eine simultane Translationsbewegung in Transportrichtung und eine Rotationsbewegung um die Längsachse der Leergutbehälter (5, 16, 21), mit mindestens einer oberhalb der Transportstrecke (1, 13, 19) angeordneten optischen Erkennungseinrichtung (2, 17, 22) zur Erfassung von Erkennungsmerkmalen der Leergutbehälter (5, 16, 21) während der simultanen Translations- und Rotationsbewegung.

## Beschreibung

Die Erfindung geht aus von einer Vorrichtung zur Erfassung von Erkennungsmerkmalen von Leergutbehältern in Leergut-Rücknahmeautomaten.

Leergut-Rücknahmeautomaten dienen dazu, einzelne Leergutbehälter, insbesondere Flaschen oder Dosen, aufzunehmen und in Abhängigkeit von charakteristischen Merkmalen der eingegebenen Leergutbehälter ein Pfand an den Benutzer auszugeben. Aus dem Stand der Technik sind Leergut-Rücknahmeautomaten bekannt, die einzelne Leergutbehälter in liegender Ausrichtung aufnehmen und in dieser Position anhand einer Erkennungseinrichtung die charakteristischen Merkmale der einzelnen Leergutbehälter ermitteln. Zu den charakteristischen Merkmalen zählen beispielsweise die Form, das Material, ein Strichcode und eine DPG-Logoerkennung. Um die liegenden Leergutbehälter so auszurichten, dass bestimmte charakteristische Merkmale, wie beispielsweise ein Strichcode, einer optischen Erkennungseinrichtung zugewandt sind und von dieser abgetastet werden können, werden die Leergutbehälter mittels Rollen oder Walzen um ihre Achse gedreht. Anschließend an die Erfassung der charakteristischen Merkmale werden die Leergutbehälter weiter transportiert um sie zu sammeln oder der weiteren Bearbeitung zuzuführen. Als Nachteil erweist sich, dass die Einrichtung zum Drehen der liegenden Leergutbehälter aus mehreren Bauteilen besteht, was ihren Aufbau aufwendig macht und Anlass zu einem Verschleiß des Leergut-Rücknahmeautomaten gibt. Darüber hinaus können die Leergutbehälter nur einzeln aufgenommen und mittels einer Erkennungseinrichtung untersucht werden. Typischerweise wird ein Leergutbehälter über eine Transporteinrichtung zugeführt und zum Abtasten der Erkennungsmerkmale angehalten. Sind die Erkennungsmerkmale nicht in Richtung einer Abtasteinrichtung ausgerichtet, wird der Leergutbehälter auf Rollen abgelegt und so lange um seine Längsachse rotiert, bis die Abtasteinrichtung die Erkennungsmerkmale lesen kann. Anschließend wird der Leergutbehälter wieder auf die Transporteinrichtung gehoben und weitertransportiert. Erst wenn ein Leergutbehälter durch die Erkennungs- oder Abtasteinrichtung abgetastet und abtransportiert ist, kann der nächste Leergutbehälter der Erkennungseinrichtung zugeführt werden. Da die Untersuchung der einzelnen Leergutbehälter einige Zeit beansprucht, ist die Geschwindigkeit, mit der Leergutbehälter aufgenommen werden können, gering. Die Geschwindigkeit kann durch eine höhere Abtastrate erhöht werden. Dies ist jedoch nur mit einer aufwendigen und teuren Beleuchtung möglich.

Der Erfindung liegt die Aufgabe zugrunde, eine Vorrichtung zur Erfassung von Leergutbehältern in Leergut-Rücknahmeautomaten zur Verfügung zu stellen, die die Feststellung der charakteristischen Merkmale der Leergutbehälter mit geringerem Aufwand ermöglicht, kostengünstig herzustellen ist, nicht anfällig gegen Verschleiß ist, und mit der Leergutbehälter schneller durch den Leergut-Rücknahmeautomat aufgenommen und erfasst werden.

Die Aufgabe wird durch eine Vorrichtung mit den Merkmalen des Anspruchs 1 gelöst. Die Vorrichtung zeichnet sich dadurch aus, dass sie mit einer Transportstrecke und mindestens einer optischen Erkennungseinrichtung zur Erfassung der Leergutbehälter ausgestattet ist. Auf der Transportstrecke werden die Leergutbehälter sowohl in eine vorgegebene Transportrichtung transportiert als auch um ihre Längsachse gedreht. Translationsbewegung und Rotationsbewegung sind simultan. Die Bewegung der Leergutbehälter entspricht einer Überlagerung aus einer Translations- und einer Rotationsbewegung. Die Leergutbehälter rollen auf der Transportstrecke. Ist die Transportstrecke lange genug, so vollziehen die Leergutbehälter bei ihrem Transport auf der Transportstrecke mindestens eine vollständige Drehung um ihre Längsachse. Die mindestens eine oberhalb der Transportstrecke angeordnete optische Erkennungseinrichtung kann während des Transports eines Leergutbehälters auf der Transportstrecke seine gesamte Oberfläche abtasten und dabei die charakteristischen Erkennungsmerkmale des Leergutbehälters erfassen. Hierzu zählt insbesondere ein an dem Leergutbehälter angeordneter Strichcode.

Auf der horizontal verlaufenden Transportstrecke können mehrere Leergutbehälter gleichzeitig transportiert werden. Das Sichtfenster der Erkennungseinrichtung ist so vorgegeben, dass sich die Transportstrecke und damit alle Leergutbehälter auf der Transportstrecke in dem Sichtfenster befinden und gleichzeitig nach Erkennungsmerkmalen abgetastet werden können. Damit kann die Abtastrate gegenüber bekannten Vorrichtungen deutlich erhöht werden.

Nach einer vorteilhaften Ausgestaltung der Erfindung ist die Transportstrecke horizontal ausgerichtet. Sie wird durch zusätzliche Elemente in Bewegung versetzt. Darüber hinaus kann die Transportstrecke auch unter einem von 0° verschiedenen Winkel gegen die Horizontale geneigt sein. In diesem Fall werden die Leergutbehälter von ihrer Startposition aus nach oben oder unten transportiert.

Nach einer vorteilhaften Ausgestaltung der Erfindung ist die Länge der Transportstrecke größer oder gleich dem Produkt aus π und dem vorgegebenen maximalen Durchmesser eines von dem Leergut-Rücknahmeautomat akzeptierten, runden Leergutbehälters. Die charakteristischen Daten sämtlicher von dem Leergut-Rücknahmeautomaten akzeptierten Leergutbehälter sind in einem Speicherelement des Leergut-Rücknahmeautomaten abgelegt. Hierzu zählt unter anderem auch der Durchmesser und die Höhe der akzeptierten Leergutbehälter. Aus diesen Durchmessern wird der größte Durchmesser und der zugehörige Umfang bestimmt. Die Länge der horizontalen Transportstrecke wird so gewählt, dass sie mindestens dem Umfang des Leergutbehälters mit dem größten Umfang entspricht. Dadurch wird gewährleistet, dass der größte, von dem Leergut-Rücknahmeautomat akzeptierte Leergutbehälter bei seinem Transport auf der horizontalen Transportstrecke eine Drehung um 360° um seine Längsachse vollzieht. Die Erfassung der charakteristischen Merkmale der akzeptierten Leergutbehälter ist damit möglich. Dies gilt auch für einen Strichcode, der sich nur an einer bestimmten Position an der Oberfläche eines Leergutbehälters befindet.

Nach einer weiteren vorteilhaften Ausgestaltung der Erfindung ist die Breite der Transportstrecke größer oder gleich der maximalen Höhe eines von dem Leergut-Rücknahmeautomat akzeptierten Leergutbehälters. Die Breite entspricht der Ausdehnung der Transportstrecke senkrecht zu der Transportrichtung der Translationsbewegung. Ist die Breite der Transportstrecke größer als die maximale Höhe eines von dem Leergut-Rücknahmeautomaten akzeptierten Leergutbehälters, so ist gewährleistet, dass die Leergutbehälter durch die Transportstrecke abgestützt werden und nicht von der Transportstrecke seitlich herunterfallen können.

Nach einer weiteren vorteilhaften Ausgestaltung der Erfindung besteht die Transportstrecke aus einer horizontalen Ebene. Auf dieser rollen die Leergutbehälter ab und führen dabei eine Bewegung aus, die einer Überlagerung aus einer Translations- und einer Rotationsbewegung entspricht. Die horizontale Ebene kann beispielsweise aus einer starren Platte bestehen. Durch eine Einrichtung an oder vor der horizontalen Ebene werden die Leergutbehälter zur ihrer Bewegung angeregt. Dabei kann es sich beispielsweise um eine schiefe Ebene handeln. Diese kann aus einer starren Platte bestehen. Die Oberfläche muss eine gewisse Rauheit aufweisen, damit Leergutbehälter aus unterschiedlichen Materialien, wie beispielsweise Glas, Metall und Kunststoff, bei ihrer Bewegung auf der schiefen Ebene eine Reibungskraft erfahren, die eine Drehung der Leergutbehälter um ihre Längsachse bewirkt. Der Neigungswinkel der schiefen Ebene ist ferner so zu wählen, dass die aus der Gewichtskraft der Leergutbehälter resultierende Hangabtriebskraft nicht so groß wird, dass eine Rotation der Leergutbehälter trotz der rauen Oberfläche der schiefen Ebene unterbleibt. Die Gewichtskraft der Leergutbehälter kann aufgeteilt werden in eine Kraftkomponente parallel zur Oberfläche der schiefen Ebene und senkrecht zur Oberfläche der schiefen Ebene. Die Komponente senkrecht zur Oberfläche der schiefen Ebene sorgt dafür, dass die Leergutbehälter bei der Bewegung auf der schiefen Ebene eine Reibungskraft erfahren. Die Kraftkomponente parallel zur Oberfläche der schiefen Ebene führt zu einem Transport der Leergutbehälter entlang der schiefen Ebene in Transportrichtung nach unten. Aufgrund der Reibungskraft werden runde Leergutbehälter um ihre Längsachse gedreht. Ist die Reibungskraft zu gering, so unterbleibt die Drehbewegung und die Leergutbehälter rutschen nur die schiefe Ebene hinunter. Die Länge der schiefen Ebene wird derart vorgegeben, dass die Geschwindigkeit der Leergutbehälter beim Verlassen der schiefen Ebene ausreicht, damit die Leergutbehälter das Ende der sich an die schiefe Ebene anschließenden horizontalen Ebene erreichen. Bei der Bewegung auf der horizontalen Ebene werden die Leergutbehälter durch Reibungskräfte abgebremst.

Der Vorteil einer schiefen Ebene vor der horizontalen Ebene besteht darin, dass zum Auslösen der Rotations- und Translationsbewegung der Leergutbehälter keine weitere Bauteile notwendig sind. Auf Walzen, Rollen oder sonstige Aktoren wird verzichtet. Die Vorrichtung weist daher ein wesentlich geringeres Baumaß als bekannte Vorrichtungen auf, ist günstiger herzustellen und weniger verschleißanfällig.

Nach einer weiteren vorteilhaften Ausgestaltung der Erfindung ist in Transportrichtung vor der horizontalen Ebene ein Aktor oder Aktuator angeordnet, der auf die Leergutbehälter eine Kraft oder einen Impuls überträgt. Dabei kann es sich beispielsweise um ein Flügelrad handeln, bei dem mehrere Flügel oder Schaufeln um eine Achse drehbar angeordnet sind. Durch eine Drehung des Flügelrades wird ein liegender Leergutbehälter, der mit seiner Längsachse parallel zu der Achse des Flügelrades ausgerichtet ist, durch eine der Schaufeln oder Flügel angestoßen. Dabei setzt er sich in Bewegung. Aufgrund der Reibung zwischen der horizontalen Ebene und dem Leergutbehälter führt dies zu einer Rollbewegung des Leergutbehälters und damit zu einer Überlagerung aus einer Translations- und einer Rotationsbewegung. Anstelle des Flügelrades kann als Aktor auch eine durch einen Antrieb betätigte Stange oder ein Stempel vorgesehen sein. Wesentlich dabei ist, dass der Aktor einen Leergutbehälter in eine Translationsbewegung auf der horizontalen Ebene versetzt. Durch die Reibung zwischen der horizontalen Ebene und dem Leergutbehälter tritt dabei ohne weiteres Zutun eine Rollbewegung des Leergutbehälters auf.

Nach einer weiteren vorteilhaften Ausgestaltung der Erfindung ist die Transportstrecke mit einem Transportband und mit mehreren oberhalb des Transportbandes und quer zum Transportband verlaufenden Stegen ausgestattet. Zwischen je zwei Stegen ist ein Abstand gegeben, der größer ist als der vorgegebene maximale Durchmesser eines von dem Leergut-Rücknahmeautomat akzeptierten, runden Leergutbehälters. Der Abstand zwischen je zwei Stegen bleibt während ihrer Bewegung entlang der Transportstrecke konstant. Zwischen je zwei Stegen wird ein Leergutbehälter auf dem Transportband angeordnet. Die Leergutbehälter werden mit ihrer Längsachse parallel zu den Stegen und senkrecht zu der Transportrichtung des Transportbandes ausgerichtet. Der Abstand zwischen den Stegen ist so groß, dass selbst der Leergutbehälter mit dem größtmöglichen Durchmesser zwischen zwei Stegen Platz findet. Das Transportband sorgt für die Translationsbewegung der Leergutbehälter. Werden die Stege mit einer kleineren oder größeren Geschwindigkeit bewegt als das Transportband, so werden die Leergutbehälter durch das Transportband gegen die Stege gedrückt. Dabei werden sie in eine Rotationsbewegung um ihre Längsachse versetzt. Ist die Geschwindigkeit der Stege kleiner als die Geschwindigkeit des Transportbandes, werden die Leergutbehälter gegen die in Transportrichtung des Transportbandes vor ihnen liegenden Stege gedrückt. Ist die Geschwindigkeit der Stege größer als die Geschwindigkeit des Transportbandes, werden die Leergutbehälter gegen die in Transportrichtung des Transportbandes hinter ihnen liegenden Stege gedrückt bzw. von diesen geschoben. Die Rotation erfolgt im ersten Fall in eine andere Richtung als im zweiten Fall. Die Geschwindigkeit des Transportbandes kann auch Null sein.

Nach einer weiteren vorteilhaften Ausgestaltung der Erfindung ist die Transportstrecke mit mehreren parallel zueinander angeordneten, drehbar gelagerten Rollen ausgestattet. Diese werden entweder zur Rotation angetrieben oder sind frei drehbar gelagert. Sie können Teil eines Transportsystems sein. Damit sorgen das Transportsystem für die Translationsbewegung der Leergutbehälter und die Rollen für die Rotationsbewegung der Leergutbehälter. Sind nur Rollen vorgesehen, werden die Leergutbehälter über eine zusätzliche schiefe Ebene vor der horizontalen Transportstrecke oder einen Aktor an der Transportstrecke in eine Translationsbewegung versetzt.

Nach einer weiteren vorteilhaften Ausgestaltung der Erfindung ist in Transportrichtung nach der Transportstrecke ein Transportband angeordnet, das die Leergutbehälter der weiteren Verarbeitung zuführt.

Nach einer weiteren vorteilhaften Ausgestaltung der Erfindung ist in Transportrichtung nach der Transportstrecke eine Aussonderungseinrichtung angeordnet, die die Leergutbehälter in Abhängigkeit von den durch die optische Erkennungseinrichtung ermittelten, charakteristischen Merkmalen verschiedenen Transportwegen oder Behältern zuführt. Auf diese Weise können zum Beispiel Einweg- und Mehrwegbehälter voneinander getrennt werden. Außerdem ist eine Sortierung von Glas, Metall und Kunststoffbehältern möglich. Bei der Aussonderungseinrichtung kann es sich beispielsweise um ein Transportband mit speziellem Antrieb handeln, der das Transportband in zwei unterschiedliche Transportrichtungen bewegt, beispielsweise in eine Hin- und eine Rückrichtung. Bei einem weiteren Ausführungsbeispiel ist das Transportband zumindest abschnittsweise schwenk- oder drehbar gelagert. Soll ein Leergutbehälter ausgesondert werden, so wird der unmittelbar nach der horizontalen Transportstrecke angeordnete Abschnitt des Transportbandes nach unten geschwenkt um den Leergutbehälter freizugeben. Anschließend wird das Transportband wieder in die Horizontale geschwenkt um den nächsten Leergutbehälter aufzunehmen. Erfüllt dieser die Kriterien für die weitere Verarbeitung, so verbleibt der schwenkbare Abschnitt des Transportbandes in der horizontalen Ausrichtung bis der betreffende Leergutbehälter der weiteren Verarbeitung zugeführt ist. Bei einem dritten Ausführungsbeispiel ist an dem Transportband ein Flügelrad angeordnet, welches die auszusondernden Leergutbehälter aktiv von dem Transportband schiebt oder passiv für die nicht auszusondernden Leergutbehälter als Auffangeinrichtung dient, während es die auszusondernden Leergutbehälter nicht abbremst und über das zweite Transportband hinausrollen lässt.

Weitere Vorteile und vorteilhafte Ausgestaltungen der Erfindung sind der nachfolgenden Beschreibung, der Zeichnung und den Ansprüchen zu entnehmen.

In der Zeichnung sind drei Ausführungsbeispiele einer erfindungsgemäßen Vorrichtung dargestellt. Es zeigen:
- Figur 1: Erstes Ausführungsbeispiel einer Vorrichtung zur Erfassung von Erkennungsmerkmalen von Leergutbehältern in Leergut- Rücknahmeautomaten in einer Ansicht von der Seite,
- Figur 2: zweites Ausführungsbeispiel einer Vorrichtung zur Erfassung von Erkennungsmerkmalen von Leergutbehältern in Leergut- Rücknahmeautomaten in einer Ansicht von der Seite,
- Figur 3: Vorrichtung gemäß Figur 2 in einer Ansicht von oben,
- Figur 4: Drittes Ausführungsbeispiel einer Vorrichtung zur Erfassung von Erkennungsmerkmalen von Leergutbehältern in einer Ansicht von der Seite,
- Figur 5: Vorrichtung gemäß Figur 4 in perspektivischer Ansicht von oben.

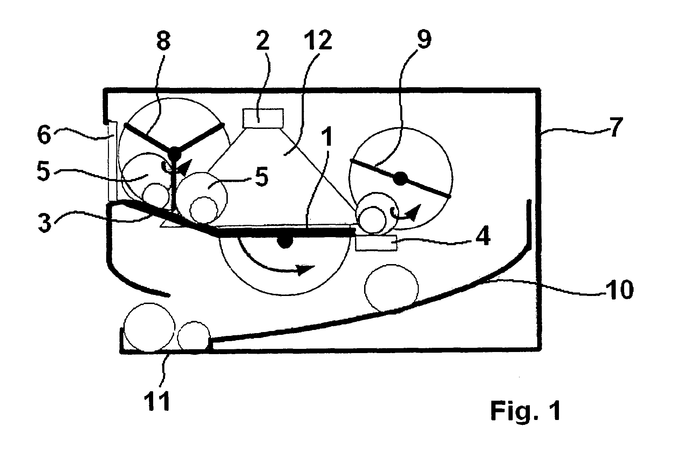

In Figur 1 ist ein erstes Ausführungsbeispiel einer Vorrichtung zur Erfassung von Erkennungsmerkmalen von Leergutbehältern mit einer horizontalen Ebene 1, einer optischen Erkennungseinrichtung 2, einer schiefen Ebene 3 und einem Transportband 4 dargestellt. Leergutbehälter 5 werden durch eine Klappe 6 in das Gehäuse 7 der Vorrichtung eingeführt und auf der schiefen Ebene 3 abgelegt. Durch ein drehbar gelagertes Flügelrad 8 werden die Leergutbehälter zurückgehalten. Erst wenn das Flügelrad 8 sich in der durch einen Pfeil markierten Richtung dreht, wird die schiefe Ebene 3 für den Leergutbehälter freigegeben. Ferner überträgt das Flügelrad 8 bei schneller Rotation eine Kraft auf den Leergutbehälter, die ihn zusätzlich zu der Hangabtriebskraft auf der schiefen Ebene in Richtung der horizontalen Ebene 1 beschleunigt. Die Hangabtriebskraft sorgt für eine Rollbewegung der runden Leergutbehälter 5, die sich auf der horizontalen Ebene 1 fortsetzt. Die Leergutbehälter 5 bewegen sich auf der horizontalen Ebene 1 in Richtung des Transportbandes 4. Da diese Translationsbewegung durch eine Rotation um die Längsachse der Leergutbehälter überlagert ist, wird während der Bewegung der Leergutbehälter auf der horizontalen Ebene 1 jeder Abschnitt des Mantels der Leergutbehälter zumindest einmal in Richtung der optischen Erkennungseinrichtung 2 ausgerichtet. Die wesentlichen Erkennungsmerkmale sind entweder an dem Mantel der Leergutbehälter angeordnet oder an diesem erkennbar. Boden und Deckel der Leergutbehälter enthalten im allgemeinen keine wesentlichen Merkmale. Damit wird gewährleistet, dass die wesentlichen Erkennungsmerkmale der Leergutbehälter während ihres Transports auf der horizontalen Ebene 1 und gegebenenfalls zumindest teilweise auf der schiefen Ebene 3 durch die optische Erkennungseinrichtung 2 erfasst werden. Nach dem Passieren der horizontalen Ebene 1 gelangen die Leergutbehälter 5 auf das Transportband 4. Oberhalb des Transportbandes ist ein zweites Flügelrad 9 drehbar angeordnet. Im Unterschied zum ersten Flügelrad 8 mit drei Flügeln weist das zweite Flügelrad 9 nur zwei Flügel auf. Wird mittels der optischen Erkennungseinrichtung festgestellt, dass ein Leergutbehälter akzeptiert wird, so verbleibt er auf dem Transportband 4 und wird der weiteren Verarbeitung zugeführt. In diesem Fall wird das zweite Flügelrad derart ausgerichtet, dass einer der beiden Flügel unmittelbar neben dem Transportband 4 angeordnet ist. Das zweite Flügelrad sorgt dafür, dass der Leergutbehälter auf dem Transportband 4 verbleibt und nicht über dieses hinausrollen kann. Wird dagegen anhand der optischen Erkennungseinrichtung 2 festgestellt, dass ein Leergutbehälter nicht akzeptiert wird, so sorgt das zweite Flügelrad 9 dafür, dass der betreffende Leergutbehälter über das Transportband 4 hinausrollt und über die Rutsche 10 in einen Sammelbehälter 11 gelangt, aus dem er anschließend entnommen werden kann.

In Figur 1 ist das Sichtfenster der optischen Erkennungseinrichtung durch ein Trapez 12 dargestellt. Daran ist erkennbar, dass der Abschnitt der schiefen Ebene 3 nach dem ersten Flügelrad 8 und die gesamte horizontale Ebene 1 im Sichtfenster der optischen Erkennungseinrichtung liegen.

Die horizontale Ebene 1 ist in Figur 1 ebenfalls drehbar angeordnet. Sollte die Bildverarbeitung der optischen Erkennungseinrichtung 2 derart schnell sein, dass bereits während des Transports eines Leergutbehälters auf der horizontalen Ebene 1 die Notwendigkeit seines Aussonderns festgestellt wird, so kann die horizontale Ebene mit dem Leergutbehälter gedreht werden, um ihn auf die Rutsche 10 zu befördern. Voraussetzung ist, dass sich kein weiterer Leergutbehälter auf der horizontalen Ebene befindet. Anschließend muss die horizontale Ebene 1 rasch wieder in die horizontale Ausrichtung zurückgeführt werden, damit sie den nächsten Leergutbehälter aufnehmen kann.

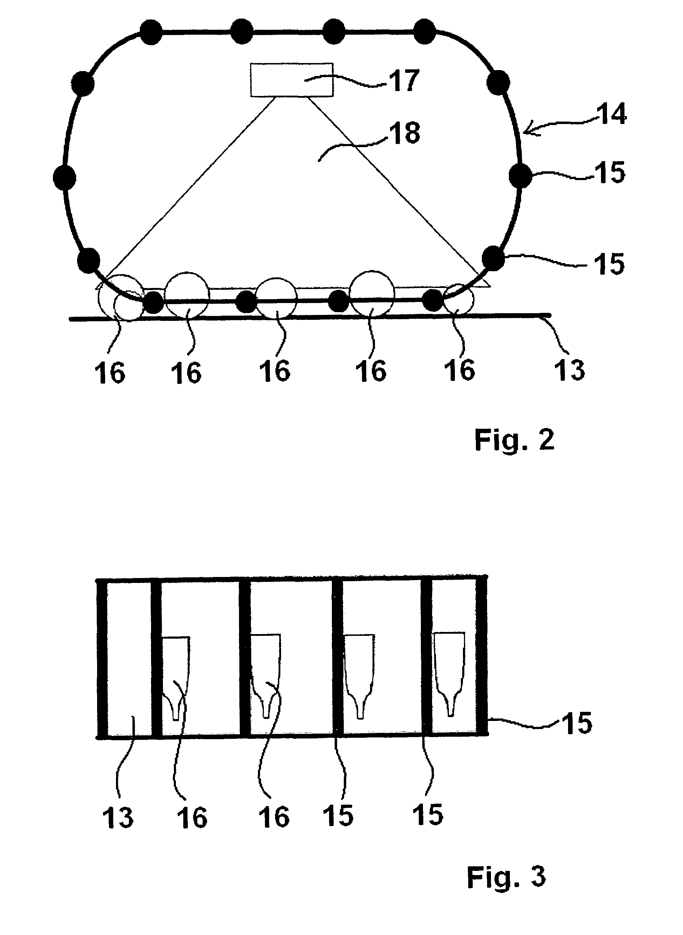

In den Figuren 2 und 3 ist ein zweites Ausführungsbeispiel einer Vorrichtung zur Erfassung von Erkennungsmerkmalen von Leergutbehältern dargestellt. Die Vorrichtung weist ein Transportband 13 auf, von dem nur derjenige Abschnitt dargestellt ist, der die horizontale Transportstrecke bildet. Der Rest des rundum laufenden Transportbandes ist in der Zeichnung nicht erkennbar. Ferner ist die Vorrichtung mit einem zweiten Transportsystem 14 ausgestattet, das eine Vielzahl von Stegen oder Leisten 15 aufweist. Die Stege 15 sind an ihren Enden an zwei rundum laufenden Transportelementen befestigt. Die Stege verlaufen alle parallel zueinander und oberhalb des Transportbandes 13, ohne das Transportband 13 zu berühren. Die Transportgeschwindigkeit der Stege 15 ist kleiner als die Transportgeschwindigkeit des Transportbandes 13. Dadurch wird erreicht, dass die auf dem Transportband 13 liegenden Leergutbehälter 16 beim Transport gegen die Stege 15 gedrückt werden. Dies führt zu einer Rotation der Leergutbehälter 16 um ihre Längsachse. Oberhalb des Transportbandes 13 befindet sich eine optische Erkennungseinrichtung 17, welche die auf dem Transportband 13 transportierten Leergutbehälter 16 abtastet. Dabei werden alle Leergutbehälter erfasst, die sich in dem Sichtfenster der optischen Erkennungseinrichtung 17 befinden. Dieses ist in Figur 2 durch ein Trapez 18 angedeutet.

Bei dem in den Figuren 2 und 3 dargestellten Ausführungsbeispiel verläuft die Transportstrecke horizontal. Dies ist jedoch nicht zwingend notwendig. Das Transportband 13 kann auch gegen die Horizontale nach oben oder unten geneigt sein.

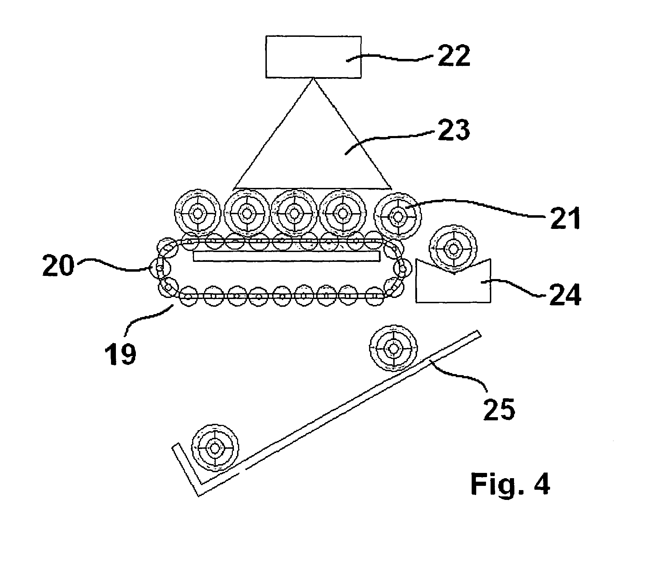

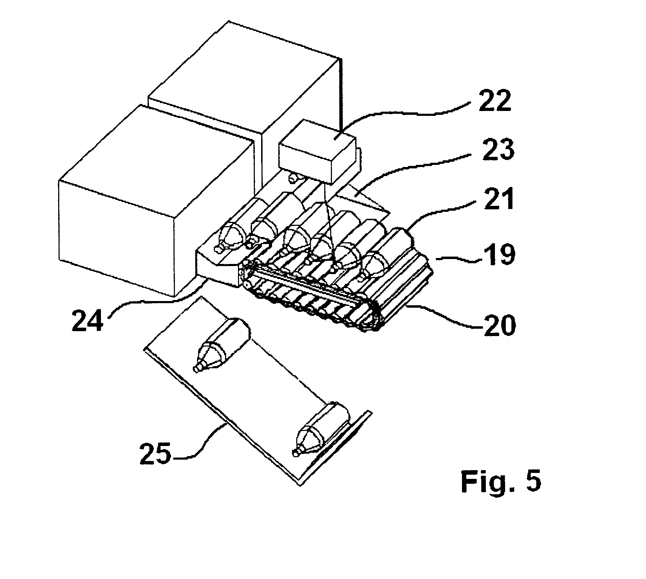

In den Figuren 4 und 5 ist ein drittes Ausführungsbeispiel einer Vorrichtung zur Erfassung von Erkennungsmerkmalen von Leergutbehältern dargestellt. Dieses dritte Ausführungsbeispiel weist eine horizontale Transportstrecke auf, die aus einem Transportsystem 19 mit einer Vielzahl von parallel verlaufenden, drehbaren Rollen 20 besteht. Das Transportsystem ist rundum laufend. Das Transportsystem 19 sorgt für eine Translationsbewegung von Leergutbehältern 21. Die Rollen 20 sorgen für eine Rotationsbewegung der Leergutbehälter. Oberhalb des Transportsystems 19 ist eine optische Erkennungseinrichtung 22 angeordnet, die die Leergutbehälter abtastet. Alle Leergutbehälter in dem Sichtfenster der optischen Erkennungseinrichtung 22 werden erfasst. Das Sichtfenster ist durch ein Trapez 23 gekennzeichnet. Nach dem Verlassen des Transportsystems 19 gelangen die Leergutbehälter 21 auf eine V-förmige Transporteinrichtung 24. Diese kann in zwei Richtungen bewegt werden. In die eine Richtung werden die Leergutbehälter 21 der weiteren Verarbeitung zugeführt. In die andere Richtung werden die Leergutbehälter auf eine schiefe Ebene 25 geschoben. Auf diese Weise können die Leergutbehälter 21 je nach dem Ergebnis der Abtastung durch die optische Erkennungseinrichtung 22 verschiedenen Behältern oder verschiedenen Bearbeitungen zugeführt werden.

Die Merkmale der Ausführungsbeispiele sind beliebig miteinander kombinierbar.

### Bezugszeichenliste

- 1: horizontale Ebene
- 2: optische Erkennungseinrichtung
- 3: schiefe Ebene
- 4: Transportband
- 5: Leergutbehälter
- 6: Klappe
- 7: Gehäuse
- 8: erstes Flügelrad
- 9: zweites Flügelrad
- 10: Rutsche
- 11: Sammelbehälter
- 12: Trapez des Sichtfensters der optischen Erkennungseinrichtung
- 13: Transportband
- 14: Transportsystem
- 15: Steg
- 16: Leergutbehälter
- 17: optische Erkennungseinrichtung
- 18: Trapez des Sichtfensters der optischen Erkennungseinrichtung
- 19: Transportsystem
- 20: Rolle
- 21: Leergutbehälter
- 22: optische Erkennungseinrichtung
- 23: Trapez des Sichtfensters der optischen Erkennungseinrichtung
- 24: Transportband
- 25: schiefe Ebene

## Patentansprüche

1. Vorrichtung zur Erfassung von Erkennungsmerkmalen von Leergutbehältern in Leergut-Rücknahmeautomaten
mit einer Transportstrecke (1, 13, 19) für eine simultane Translationsbewegung in Transportrichtung und eine Rotationsbewegung um die Längsachse der Leergutbehälter (5, 16, 21),
mit mindestens einer oberhalb der Transportstrecke angeordneten optischen Erkennungseinrichtung (2, 17, 22) zur Erfassung von Erkennungsmerkmalen der Leergutbehälter (5, 16, 21) während der simultanen Translations- und Rotationsbewegung.

2. Vorrichtung nach Anspruch 1, **dadurch gekennzeichnet, dass** die Transportstrecke horizontal angeordnet ist.

3. Vorrichtung nach Anspruch 1 oder 2, **dadurch gekennzeichnet, dass** die Länge der Transportstrecke (1, 13, 19) größer oder gleich dem Produkt aus π und dem vorgegebenen maximalen Durchmesser eines von dem Leergut-Rücknahmeautomat akzeptierten, runden Leergutbehälters (5, 16, 21) ist.

4. Vorrichtung nach Anspruch 1, 2 oder 3, **dadurch gekennzeichnet, dass** die Breite der Transportstrecke (1, 13, 19) größer oder gleich der maximalen Höhe eines von dem Leergut-Rücknahmeautomat akzeptierten Leergutbehälters (5, 16, 21) ist.

5. Vorrichtung nach einem der vorhergehenden Ansprüche, **dadurch gekennzeichnet, dass** die Transportstrecke aus einer horizontalen Ebene (1) besteht.

6. Vorrichtung nach Anspruch 5, **dadurch gekennzeichnet, dass** in Transportrichtung vor der horizontalen Ebene (1) eine schiefe Ebene (3) angeordnet ist, die die horizontale Ebene (1) mit einem höheren Niveau verbindet.

7. Vorrichtung nach Anspruch 5, **dadurch gekennzeichnet, dass** in Transportrichtung vor der horizontalen Ebene (1) ein Aktor (8) angeordnet ist, der auf die Leergutbehälter (5) eine Kraft oder einen Impuls überträgt.

8. Vorrichtung nach einem der Ansprüche 1 bis 4, **dadurch gekennzeichnet, dass** die Transportstrecke mit einem Transportband (13) und mit mehreren oberhalb des Transportbandes (13) und quer zum Transportband (13) verlaufenden Stegen (15) ausgestattet ist, und dass zwischen je zwei Stegen (15) ein Abstand gegeben ist, der größer ist als der vorgegebene maximale Durchmesser eines von dem Leergut-Rücknahmeautomaten akzeptierten, runden Leergutbehälters (16).

9. Vorrichtung nach Anspruch 8, **dadurch gekennzeichnet, dass** die Vorrichtung mit einem Antrieb für das Transportband (13) und mit einem Antrieb für die Stege (15) ausgestattet ist, welche das Transportband (13) und die Stege (15) in Transportrichtung bewegen wobei die Transportgeschwindigkeit des Transportbandes (13) verschieden ist von der Transportgeschwindigkeit der Stege (15).

10. Vorrichtung nach einem der Ansprüche 1 bis 4, **dadurch gekennzeichnet, dass** die Transportstrecke mit mehreren parallel zueinander angeordneten, drehbar gelagerten Rollen (20) ausgestattet ist.

11. Vorrichtung nach Anspruch 10, **dadurch gekennzeichnet, dass** in Transportrichtung vor den Rollen (20) eine schiefe Ebene und/ oder ein Aktor angeordnet sind, welche die Leergutbehälter in eine Bewegung versetzen.

12. Vorrichtung nach Anspruch 10, **dadurch gekennzeichnet, dass** die Rollen (20) Teil eines Transportsystems (19) sind.
